# EUROPEAN PATENT SPECIFICATION

(11) **EP 1 304 817 B1**
(45) Date of publication and mention of the grant of the patent: **15.02.2006**
(21) Application number: 02257181.4
(22) Date of filing: 16.10.2002
(51) Int. Cl.: H04B 7/005, H04B 7/06

(54) **A transmission power setting method, a mobile communications system, and a base station**
Verfahren zur Sendeleistungsfestlegung, Mobilkommunikationssystem und Basisstation
Procédé pour définir la puissance de transmission, système de communication mobile et station de base

(30) Priority: 17.10.2001 JP 2001319347
(43) Date of publication of application: 23.04.2003
(73) Proprietor: NTT DoCoMo, Inc., Tokyo 100-6150 (JP)
(72) Inventor: Futakata, Toshiyuki, Chiyoda-ku, Tokyo 100-6150 (JP); Ishiguro, Takayuki, Chiyoda-ku, Tokyo 100-6150 (JP); Uk Moon, Sung, Chiyoda-ku, Tokyo 100-6150 (JP); Yamada, Mayu, Chiyoda-ku, Tokyo 100-6150 (JP)
(74) Representative: Rees, Alexander Ellison

(56) References cited:
- EP-A- 0 986 192
- EP-A- 1 139 685
- EP-A- 1 207 628
- WO-A-01/84740
- DE-A- 19 917 061
- DE-A- 19 957 299
- US-A- 6 122 260

## Description

### BACKGROUND OF THE INVENTION

### 1. Field of the Invention

The present invention relates to a method for setting up transmission power of a downlink time slot that is assigned to a downlink circuit from a base station to a mobile station in a mobile communications system that adopts a TDD (Time Division Duplex) method, and includes a base station and a mobile station.

### 2. Description of the Related Art

In a conventional mobile communications system that adopts the TDD method, a time slot is assigned alternately to each of an uplink from the mobile station to the base station, and a downlink in the opposite direction.

The base station is required to set up an appropriate transmission power such that the transmissions in the time slot assigned to the downlink circuit (hereinafter, called the downlink time slot) is surely received by the mobile station.

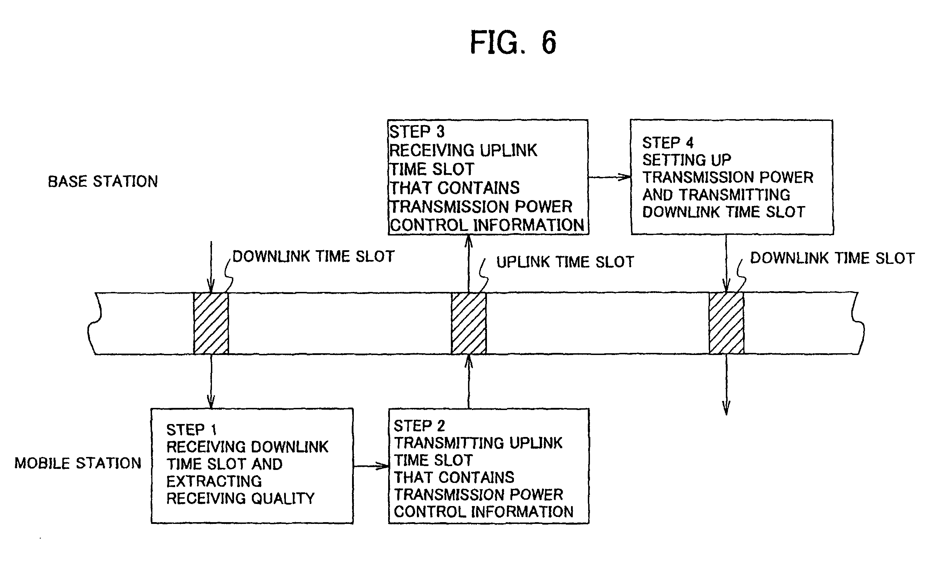

Fig. 6 is for explaining a first conventional method of setting up the transmission power of the downlink time slot. In the first conventional method, the mobile station extracts receiving quality of the downlink time slot (a ratio of power of a desired signal to power of interference signals, a bit error rate, a block error rate, and the like), when receiving the downlink time slot from the base station (Step 1).

Next, when the mobile station determines that the receiving quality is not fulfilling predetermined quality, the mobile station requests the base station to increase the transmission power. Conversely, when the mobile station determines that the receiving quality is excessively higher than the predetermined quality, the mobile station requests the base station to decrease the transmission power. A request to increase or decrease the transmission power (TPC: Transmission Power Control) is contained in the time slot assigned to the uplink circuit (hereinafter called uplink time slot), and transmitted to the base station (Step 2).

When the base station receives the uplink time slot containing the transmission power control information from the mobile station (Step 3), the base station adjusts the transmission power of a subsequent downlink time slot accordingly (Step 4). Such an algorithm for setting up downlink power in TDD systems is described in EP-A-0 986 192.

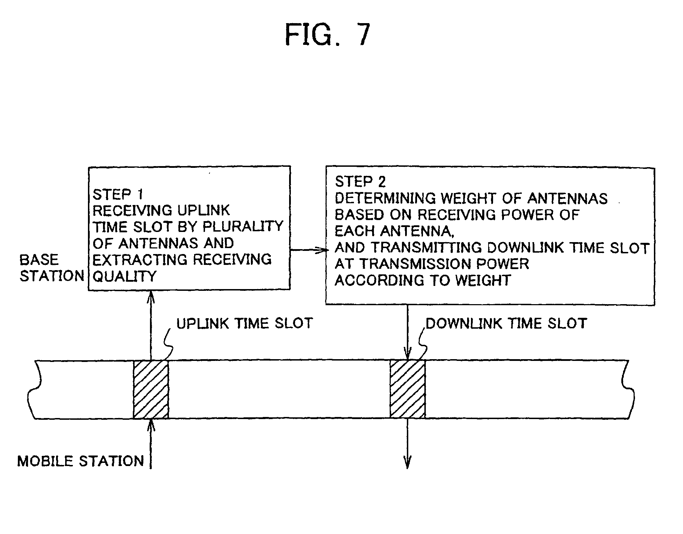

Fig. 7 is for explaining a second conventional method for setting up the transmission power of the downlink time slot. Here, the base station includes a plurality of antennas, each of which is capable of both receiving and transmitting, such that space diversity is provided.

In the second conventional method, the base station receives the uplink time slot from the mobile station with the plurality of the antennas, and determines receiving power of the uplink time slot received through each of the antennas (Step 1). Next, based on the receiving power through each antenna, the base station determines weight of each antenna, and transmits a subsequent downlink time slot at transmission power that corresponds to the weight of each antenna (Step 2).

In a W-CDMA (Wide-band Code Division Multiple Access)-TDD mobile communications system that employs a W-CDMA-TDD method, a plurality of downlink time slots can be contiguously assigned between a preceding uplink time slot and a subsequent uplink time slot, while a downlink time slot and an uplink time slot have to be alternately assigned in the TDD system described above.

If the first conventional method mentioned above is applied to setting up the transmission power of the downlink time slot in the W-CDMA system, the base station will set up the same transmission power for all the time slots contiguously assigned, even if the receiving quality may be different from time slot to time slot. This is because only one piece of transmission power control information can be contained in an uplink time slot in the present (conventional) specification.

If the second conventional method mentioned above is applied to setting up the transmission power of the downlink time slot in the W-CDMA system, the same transmission power will be set up for all the time slots contiguously assigned as far as an antenna is concerned, even if the receiving quality may be different from time slot to time slot. The power may be different from antenna to antenna, according to the weight, however.

### SUMMARY OF THE INVENTION

Accordingly, in order to solve the problem mentioned above, the object of the present invention is to offer a transmission power setting method, a mobile communication system and a base station that substantially obviate one or more of the problems caused by the limitations and disadvantages of the related art, and realize appropriate setting of transmission power of each time slot individually, when a plurality of time slots are contiguously assigned for a downlink circuit.

Features and advantages of the present invention will be set forth in the description that follows, and in part will become apparent from the description and the accompanying drawings, or may be learned by practice of the invention according to the teachings provided in the description. Objects as well as other features and advantages of the present invention will be realized and attained by the method, the mobile communications system, and the base station particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides a transmission power setting method of a mobile communications system that employs a TDD method for communications between a base station that is equipped with a plurality of antennas, each of which is capable of both receiving and transmitting, and a mobile station, wherein a first number of downlink slots are contiguously assigned to a downlink circuit that carries traffic from the base station to the mobile station, and characterised in that a second number of uplink time slots are contiguously assigned to an uplink circuit that carries traffic from the mobile station to the base station, where the first number and the second number do not have to be equal, and transmission power of each of said downlink time slots is individually set up, comprising:
the base station extracting a receiving power value of each of the uplink contiguous time slots for each of the antennas,
the base station averaging the receiving power values of the contiguous uplink time slots for each of antennas, and
the base station setting up for each of the antennas transmission power of each of the downlink time slots that are contiguously assigned as a second group and to be transmitted from the base station through each of the antennas based on the averaged receiving power of the uplink time slots.

The invention further provides a mobile communication system and base station adapted to carry out the method.

The above transmission power setting up method can be applied where an initial predetermined transmission power value is set up. That is, the initial transmission power is adjusted according to the transmission power that is obtained in the manner described above.

Accordingly, the present invention realizes the transmission power setting up for each of the downlink time slots to be transmitted next.

### BRIEF DESCRIPTION OF THE DRAWINGS

Fig. 1 shows an example of a mobile communications system of the present invention;
Fig. 2 is a block diagram of an example of a mobile station of the present invention;
Fig. 3 is a block diagram of an example of a base station of the present invention;
Fig. 4 shows relations between control delay time and required transmission power sufficient to provide predetermined receiving quality, with fading frequency being a parameter, considered in the present invention;
Fig.5 shows a sequence of operations of the mobile station and the base station of the present invention;
Fig.6 is for explaining the first conventional method of setting transmission power of a downlink time slot; and
Fig.7 is for explaining the second conventional method of setting transmission power of a downlink time slot.

### DESCRIPTION OF THE PREFERRED EMBODIMENTS

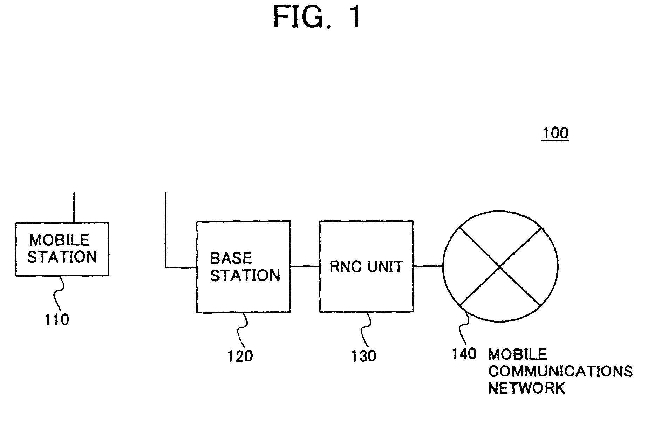

In the following, embodiments of the present invention will be described with reference to the accompanying drawings. Fig. 1 shows an example of a mobile communications system concerning the embodiments of the present invention. The mobile communications system 100 shown in Fig. 1 includes a mobile station 110, such as a cellular telephone terminal, a base station 120, a radio network control unit (RNC) 130 that controls the whole mobile communications system, and a mobile communications network 140.

In the mobile communications system 100, a TDD method is adopted for communications between the base station 120 and the mobile station 110, and time slots are asymmetrically assigned to each of an uplink circuit that serves traffic from the mobile station 110 to the base station 120, and a downlink circuit that serves traffic from the base station 120 to the mobile station 110. In the asymmetric assignment of the time slots, the number of the time slots contiguously assigned to the uplink circuit may be different from the number of the time slots contiguously assigned to the downlink circuit. For example, three downlink time slots can be contiguously assigned and transmitted with one uplink time slot preceding and another uplink time slot following.

In the mobile communications system 100, transmission power of each of the time slots that are to be contiguously assigned to the downlink circuit is decided based on factors such as the latest receiving quality measured by the mobile station 110 of the downlink time slots that are contiguously assigned to the downlink circuit, the latest receiving power measured by the base station 120 of one or more uplink time slots assigned to the uplink circuit, control delay time, and fading frequency of the communications between the mobile station 110 and the base station 120, as described in detail later.

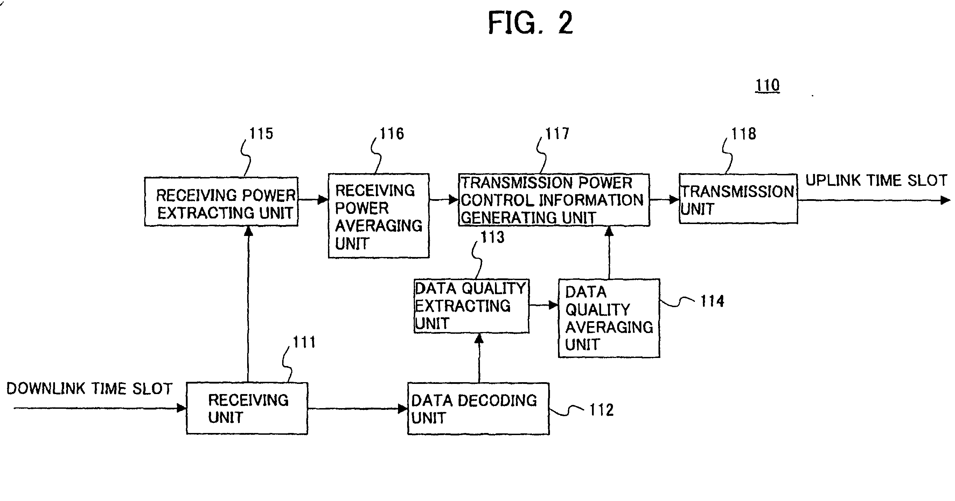

Fig. 2 is a block diagram of an example of the mobile station 110. As shown in Fig. 2, the mobile station 110 includes a receiving unit 111, a data decoding unit 112, a data quality extracting unit 113, a data quality averaging unit 114, a receiving power extracting unit 115, a receiving power averaging unit 116, a transmission power control information generating unit 117, and a transmitting unit 118.

The receiving unit 111 receives a plurality of time slots that the base station 120 contiguously transmits on the downlink circuit. The downlink time slots received by the receiving unit 111 are provided to the data decoding unit 112 and the receiving power extracting unit 115.

The data decoding unit 112 decodes each of the plurality of the time slots provided from the receiving unit 111, the time slots being contiguously assigned to the downlink circuit. In the case that the mobile communications system 100 adopts a CDMA (code-division-multiple-access) method, for example, the data decoding unit 112 decodes data by reverse diffusion using a predetermined diffusion code.

The data quality extracting unit 113 extracts data quality values (a bit error rate, a block error rate, and the like) of each of the plurality of the time slots contiguously assigned to the downlink circuit, based on the data (decoded data) decoded by the data decoding unit 112.

The data quality averaging unit 114 averages the data quality values of the plurality of the time slots, which are extracted by the data quality extracting unit 113.

The averaged data quality value is provided to the transmission power control information generating unit 117. Here, it is conceivable that the last time slot of the downlink time slots contiguously assigned better represents the latest communication path conditions, rather than the earlier time slots. For this reason, before the averaging takes place, lighter weight is attached to the quality value of earlier time slots, and heavier weight is attached to the quality value of later time slots. In other words, the data quality averaging unit 114 assigns heavier weight to time slots that are received later, such that time slots that are closer to the subsequent time slots contribute more heavily to the calculation of the average value.

The receiving power extracting unit 115 extracts receiving power of each of the time slots that are contiguously assigned to the downlink circuit, the time slots being provided from the receiving unit 111. Then, the receiving power extracting unit 115 calculates a signal-to-noise ratio (S/N ratio) of each time slot, based on the extracted receiving power.

The receiving power averaging unit 116 averages the receiving power and the S/N ratio of all the time slots that are provided by the receiving power extracting unit 115.

As described above, as for the plurality of downlink time slots received, the later a time slot is received, the closer the time slot is to subsequent time slots to be transmitted. For this reason, the receiving power averaging unit 116 may assign heavier weight to the receiving power and an S/N ratio of the later time slots, in averaging operations. The averaged receiving power and the averaged S/N ratio are provided to the transmission power control information generating unit 117.

The transmission power control information generating unit 117 generates transmission power control information as a request for the transmission power of the time slots that are to be contiguously transmitted subsequently, based on the averaged data quality provided from the data quality averaging unit 114, and the averaged receiving power and the averaged S/N ratio that are provided from the receiving power averaging unit 116.

Specifically, the transmission power control information generating unit 117 requests that the transmission power be raised when the averaged data quality and the averaged S/N ratio are not fulfilling predetermined quality, or when the averaged receiving power is not fulfilling the predetermined power level. On the other hand, the transmission power control information generating unit 117 requests that the transmission power be lowered when the averaged data quality and the averaged S/N ratio are excessively better than the predetermined quality, or when the averaged receiving power is excessively higher than the predetermined power level. In the following, the data quality, the S/N ratio, and the receiving power, all combined, are called "receiving quality".

The transmission power control information generated by the transmission power control information generating unit 117 is provided to the transmitting unit 118. The transmitting unit 118 modulates the transmission power control information generated by the transmission power control information generating unit 117, which is contained in an uplink time slot, and transmitted to the base station 120.

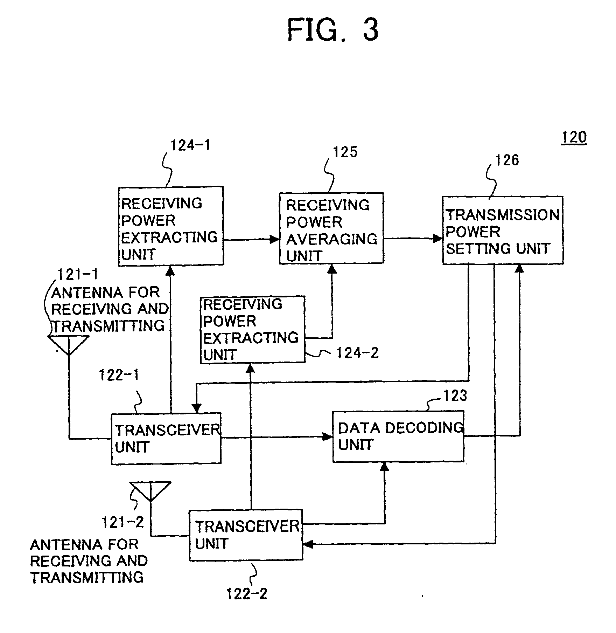

Fig. 3 is a block diagram of an example of the base station 120. The base station 120 shown in Fig. 3 includes antennas for both receiving and transmitting 121-1 and 121-2, transceiver units 122-1 and 122-2, a data decoding unit 123, receiving power extracting units 124-1 and 124-2, a receiving power averaging unit 125, and a transmission power setting unit 126. The base station 120 is an example of a diversity configuration with the two antennas 121-1 and 121-2, wherein the transceiver units 122-1 and 122-2, and the receiving power extracting units 124-1 and 124-2 are provided corresponding to the antennas 121-1 and 121-2, respectively.

The antenna 121-1 and the transceiver unit 122-1 receive one or more uplink time slots that are contiguously assigned and transmitted from the mobile station 110. The uplink time slots received by the antenna 121-1 and the transceiver unit 122-1 are provided to the data decoding unit 123 and the receiving power extracting unit 124-1.

Similarly, the antenna 121-2 and the transceiver unit 122-2 receive one or more uplink time slots that are contiguously assigned and transmitted from the mobile station 110. The uplink time slots received by the antenna 121-2 and the transceiver unit 122-2 are provided to the data decoding unit 123 and the receiving power extracting unit 124-2.

The data decoding unit 123 decodes each of the one or more uplink time slots, which are contiguously assigned, provided from the transceiver units 122-1 and 122-2. Transmission power control information is included in the data that is decoded by the data decoding unit 123. The data decoding unit 123 extracts the transmission power control information from the decoded data, and provides the transmission power control information to the transmission power setting unit 126.

The receiving power extracting unit 124-1 extracts a receiving power value of each of the uplink time slots provided from the transceiver unit 122-1. The receiving power averaging unit 125 averages the receiving power values of the time slots, the values being extracted by the receiving power extracting unit 124-1. The average of the receiving power values is provided to the transmission power setting unit 126.

Similarly, the receiving power extracting unit 124-2 extracts a receiving power value of each of the uplink time slots provided from the transceiver unit 122-2. The receiving power averaging unit 125 averages the receiving power values of the time slots, the values being extracted by the receiving power extracting unit 124-2. The average of the receiving power values is provided to the transmission power setting unit 126.

Based on the transmission power control information provided from the data decoding unit 123, and the averaged receiving power value provided from the receiving power averaging unit 125, the transmission power setting unit 126 sets up transmission power of subsequent downlink time slots that are contiguously assigned and to be transmitted through each of the antenna 121-1 and the antenna 121-2.

Specifically, when the transmission power control information provided from the data decoding unit 123 requests that the transmission power be raised, the transmission power setting unit 126 increases the transmission power of the subsequent time slots that are contiguously assigned. Conversely, when the transmission power control information provided from the data decoding unit 123 requests that the transmission power be lowered, the transmission power setting unit 126 decreases the transmission power of the subsequent time slots that are contiguously assigned.

Then, the transmission power setting unit 126 distributes the power value that is either increased or decreased in the manner described above between power of the subsequent downlink time slots to be transmitted from the antenna 121-1 and power of the subsequent downlink time slots to be transmitted from the antenna 121-2, based on the ratio of the averaged receiving power value corresponding to the antenna 121-1 to the averaged receiving power value corresponding to the antenna 121-2, the power values being provided from the receiving power averaging unit 125. For example, if the ratio of the averaged receiving power corresponding to the antenna 121-1 to the averaged receiving power corresponding to the antenna 121-2 is 2:1, the transmission power setting unit 126 allocates the transmission power such that the ratio of the transmission power of the subsequent time slots transmitted from the antenna 121-1 to the transmission power of the subsequent time slots transmitted from the antenna 121-2 is set to 2:1.

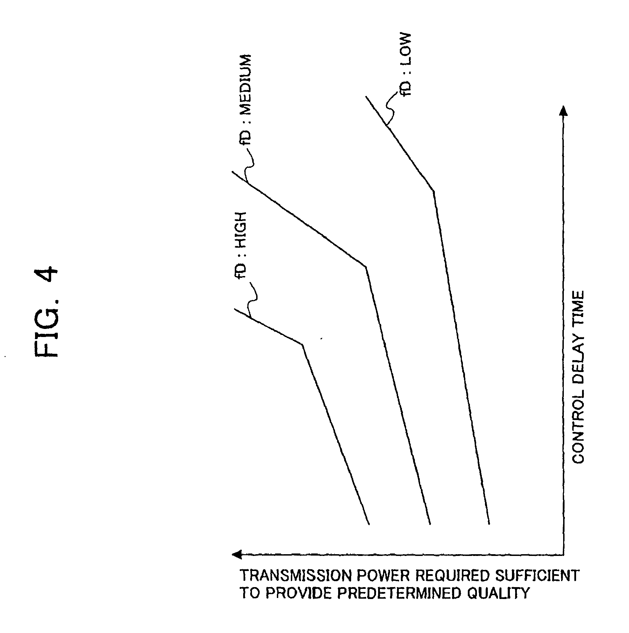

Fig. 4 shows relations between the transmission power required sufficient to predetermined receiving quality and control delay time, with fading frequency being a parameter. Here, the control delay time refers to a time lapse from a point in time when the mobile station 110 determines the averaged receiving quality to a point in time when the base station transmits the downlink time slots contiguously assigned, and a time lapse from a point in time when the base station determines the averaged receiving power to a point in time when the base station 120 transmits the downlink time slots contiguously assigned.

As seen from Fig. 4, the longer the control delay time is, the higher the transmission power is required to attain the predetermined receiving quality at the mobile station 110. That is, the later a time slot in the time slots contiguously assigned is transmitted, the higher transmission power is required. It is also shown that the higher the fading frequency is in the communication between the mobile station 110 and the base station 120, the higher the transmission power is required.

In view of the characteristics shown in Fig. 4, the transmission power setting unit 126 acquires the fading frequency in the communication path between the mobile station 110 and the base station 120 by a predetermined method. Then, the transmission power setting unit 126 sets transmission power of each time slot of the time slots contiguously assigned to be transmitted from the antenna 121-1 such that higher transmission power is set to later time slots, and higher transmission power is set where the fading frequency is higher, based on the characteristic shown in Fig. 4. The transmission power that is set up in this manner is provided to the transceiver unit 122-1.

Similarly, the transmission power setting unit 126 sets transmission power of each time slot of the time slots contiguously assigned to be transmitted from the antenna 121-2 such that higher transmission power is set to later time slots, and higher transmission power is set where the fading frequency is high, based on the characteristic shown in Fig. 4. The transmission power that is set up in this manner is provided to the transceiver unit 122-2.

Here, the transmission power setting unit 126 may be provided with a predetermined initial power value, where the initial power value is adjusted to coincide with the transmission power of each downlink time slot to be transmitted from each of the antennas 121-1 and 121-2 in accordance with the description above.

The antenna 121-1 and the transceiver unit 122-1 transmit at the transmission power set up by the transmission power setting unit 126 for each downlink time slot of the subsequent time slots contiguously assigned. Similarly, the antenna 121-2 and the transceiver unit 122-2 transmit at the transmission power set up by the transmission power setting unit 126 for each downlink time slot of the subsequent time slots contiguously assigned.

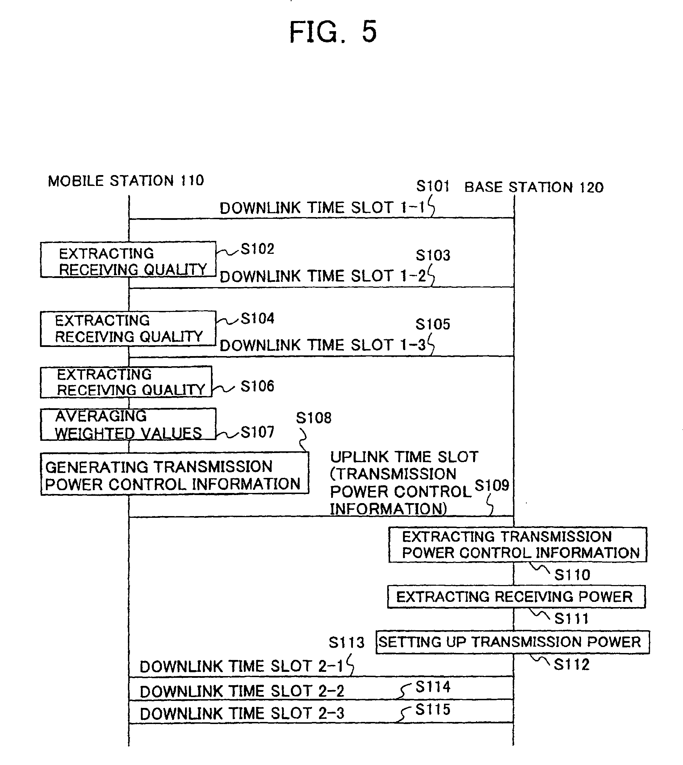

In the following, operations of the mobile station 110 and the base station 120 are explained, referring to the sequence drawing provided in Fig. 5. In Fig. 5, an examples is shown, where one uplink time slot and three downlink time slots that are contiguously provided are assigned.

The base station 120 transmits the three downlink time slots 1-1, 1-2, and 1-3 one by one sequentially through the antennas 121-1 and 121-2 (Steps 101, 103, and 105).

Each time the mobile station 110 receives the three downlink time slots 1-1, 1-2, and 1-3, the mobile station 110 extracts the receiving quality of each of the three time slots (Steps 102, 104, and 106). Then, the mobile station 110 assigns predetermined weight to the receiving quality corresponding to each of the time slots 1-1, 1-2, and 1-3, and extracts the averaged receiving quality (Step 107).

Next, the mobile station 110 generates the transmission power control information as a request for the transmission power of time slots 2-1, 2-2, and 2-3 that are contiguously assigned and to be transmitted next, based on the averaged receiving quality (Step 108). The mobile station 110 modulates the generated transmission power control information by a predetermined method, includes the modulated transmission power control information in an uplink time slot, and transmits the modulated transmission power control information to the base station 120 (Step 109).

The base station 120 extracts the receiving power of the uplink time slot while extracting the transmission power control information from the data acquired by decoding the uplink time slot (Step 110), when the uplink time slot transmitted from the mobile station 110 is received through the antennas 121-1 and 121-2 (Step 111).

Then, the base station 120 sets up the transmission power (Step 112) of each of the downlink time slots 2-1, 2-2, and 2-3 that are to be transmitted next, based on the transmission power control information, the extracted receiving power, and the characteristics shown in Fig. 4, and the time slots are transmitted through each of the antennas 121-1 and 121-2 (Steps 113, 114, and 115).

Although not illustrated, when the mobile station 110 receives the downlink time slots 2-1, 2-2, and 2-3, the mobile station 110 extracts the receiving quality as in steps 102, 104, and 106. Afterwards, operations after step 107 are repeated.

As described above, the mobile communications system 100 sets up the transmission power of the next downlink time slots contiguously assigned based on receiving quality at the mobile station 110 of the current downlink time slots contiguously assigned, receiving power at the base station 120 of the uplink time slot, and the characteristics shown in Fig. 4. The number of the uplink time slots may be one, as the above example took, or larger. In this manner, appropriate transmission power is set up to each of the downlink time slots that are contiguously assigned.

In the above-mentioned embodiments of the mobile station 110, the data quality extracting unit 113 and the receiving power extracting unit 115 correspond to a downlink receiving quality value extracting means, and the data quality averaging unit 114 and the receiving power averaging unit 116 correspond to a receiving quality value averaging means.

In the above-mentioned embodiments of the base station 120, the transmission power setting unit 126 corresponds to a transmission power setting means, the receiving power extracting units 124-1 and 124-2 correspond to an uplink receiving power value extracting means, and the receiving power averaging unit 125 corresponds to an uplink receiving power averaging means.

According to the present invention, suitable transmission power is allocated to each of the downlink time slots that are contiguously assigned for the downlink circuit, based on factors such as average receiving quality of the downlink time slots.

Further, the present invention is not limited to these embodiments, but various variations and modifications may be made without departing from the scope of the present invention.

The present application is based on Japanese priority application No. 2001-319347 filed on October 17, 2001 with the Japanese Patent Office.

## Claims

1. A transmission power setting method of a mobile communications system (100) that employs a TDD method for communications between a base station (120) that is equipped with a plurality of antennas (121), each of which is capable of both receiving and transmitting, and a mobile station (110), wherein a first number of downlink slots are contiguously assigned to a downlink circuit that carries traffic from the base station to the mobile station, and **characterised in that** a second number of uplink time slots are contiguously assigned to an uplink circuit that carries traffic from the mobile station to the base station, where the first number and the second number do not have to be equal, and transmission power of each of said downlink time slots is individually set up, comprising:
the base station extracting a receiving power value of each of the uplink contiguous time slots for each of the antennas,
the base station averaging the receiving power values of the contiguous uplink time slots for each of the antennas, and
the base station setting up for each of the antennas transmission power of each of the downlink time slots that are contiguously assigned as a second group and to be transmitted from the base station through each of the antennas based on the averaged receiving power of the uplink time slots.

2. A transmission power setting method as claimed in claim 1, further comprising:
the mobile station extracting receiving quality values of all the downlink time slots that are contiguously assigned as a first group,
the mobile station averaging the receiving quality values of all the downlink time slots contiguously assigned as the first group, and
the base station setting up for each of the antennas transmission power of each of downlink time slots contiguously assigned as a second group, which are to be transmitted from the base station through each of the antennas based on the averaged receiving quality of the first group of the downlink time slots contiguously assigned, and the averaged receiving power of the contiguous uplink time slots.

3. The transmission power setting method as claimed in claim 2, wherein each of the receiving quality values of all the downlink time slots is multiplied with a predetermined weighting factor, and the averaged receiving quality is obtained by averaging the receiving quality values that are weighted.

4. The transmission power setting method as claimed in claim 2, wherein the transmission power of each of the downlink time slots of the second group is set up corresponding to a time lapse from a point in time when the average of the receiving quality values of the first group of the downlink time slots is obtained to a point in time when each of the time slots of the second group is transmitted.

5. The transmission power setting method as claimed in claim 4, wherein an initial transmission power value is predetermined, and the transmission power of each of the downlink time slots of the second group is adjusted from the predetermined initial transmission power value according to a time lapse from a point in time when the average of the receiving quality values of the first group of the downlink time slots is obtained to a point in time when each of the time slots of the second group is transmitted.

6. The transmission power setting method as claimed in claim 1, wherein the averaged receiving power value is obtained by averaging the extracted receiving power values of the uplink time slots that are weighted by a predetermined set of weighting factors.

7. The transmission power setting method as claimed in claim 1, wherein the transmission power for each of the downlink time slots of the second group is set up according to a time lapse from a point in time when the averaged receiving power value is obtained for the uplink time slots to a point in time when each of the downlink time slots of the second group is transmitted.

8. The transmission power setting method as claimed in claim 7, wherein an initial power value is predetermined, the transmission power value is obtained corresponding to the time lapse from the point in time when the averaged receiving power value is obtained for the uplink time slots to the time point when each of the downlink time slots of the second group is transmitted, and the initial power value is adjusted to coincide with the transmission power value.

9. The transmission power setting method as claimed in claim 2, wherein the transmission power of each of the downlink time slots of the second group is set up in accordance with fading frequency in communications between the base station and the mobile station.

10. The transmission power setting method as claimed in claim 9, wherein an initial transmission power is predetermined, and the transmission power of each of the downlink time slots of the second group is obtained by adjusting the initial transmission power in accordance with fading frequency in communications between the base station and the mobile station.

11. A mobile communication system (100) that employs a TDD method for communications between a base station (120) that is equipped with a plurality of antennas (121), each of which is capable of both receiving and transmitting, and a mobile station (110), wherein a first number of downlink time slots are contiguously assigned to a downlink circuit that carries traffic from the base station to the mobile station, and **characterised in that** a second number of uplink time slots are contiguously assigned to an uplink circuit that carries traffic from the mobile station to the base station, where the first number and the second number do not have to be equal, and transmission power of each of each of said downlink time slots is individually set up, comprising:
an uplink receiving power value extracting unit (123) adapted to extract receiving power values of all contiguous uplink time slots for each of the antennas, and
an uplink receiving power averaging unit (124) adapted to average the receiving power values of the contiguous uplink time slots for each of the antennas, and
transmission power setting means (126) in the base station adapted to set up, for each of the antennas, the transmission power of each of the downlink time slots contiguous assigned as a second group that are to be transmitted from the base station through each of the antennas based on the averaged receiving power value of the contiguous uplink time slots.

12. The mobile communications system according to claim 11, further comprising
downlink receiving quality value extracting means (115) provided in the mobile station, adapted to extract receiving quality values of each of the plurality of downlink time slots that are transmitted as a first group,
downlink receiving quality value averaging means (116) provided in the mobile station, adapted to average quality values of the downlink time slots that are contiguously transmitted as the first group, and the transmission power setting means provided in the base station, being adapted to set up transmission power for each of downlink time slots that are to be transmitted as a second group, which are contiguously assigned to the downlink circuit.

13. The mobile communications system as claimed in claim 12, wherein the downlink receiving quality averaging means is adapted to attach weight, according to a predetermined set of weighting factors, to each of the downlink receiving quality values of the downlink time slots of the first group, and the downlink receiving quality averaging means is adapted to average the downlink receiving quality values that are weighted hereinabove.

14. A mobile communications system as claimed in claim 12, wherein the transmission power setting means is adapted to set up the transmission power for each of the downlink time slots that are to be contiguously transmitted as the second group according to a time lapse from a point in time when the average of the receiving quality values of the first group of the downlink time slots is obtained to a point in time when each of the time slots of the second group is transmitted.

15. The mobile communication system as claimed in claim 14, wherein the transmission power setting means comprises a predetermined initial transmission power value, and is adapted to adjust the transmission power of each of the downlink time slots of the second group from the predetermined initial transmission power value according to a time lapse from a point in time when the average of the receiving quality values of the first group of the downlink time slots is obtained to a point in time when each of the time slots of the second group is transmitted.

16. The mobile communications system as claimed in claim 12, wherein the uplink receiving power averaging means is adapted to attach weight, according to a predetermined set of weighting factors, to each of the receiving power values of the uplink time slots, and averages the receiving power values that are weighted hereinabove.

17. The mobile communications system as claimed in claim 12, wherein the transmission power setting means is adapted to set up the transmission power for each of the downlink time slots of the second group according to a time lapse from a point in time when the averaged receiving power value is obtained for the uplink time slots to a point in time when each of the downlink time slots of the second group is transmitted.

18. The mobile communications system as claimed in claim 17, wherein the transmission power setting means is adapted to provide an initial power value that is predetermined, and to obtain the transmission power value according to the time lapse from the point in time when the averaged receiving power value is obtained for the uplink time slots to the time point when each of the downlink time slots of the second group is transmitted, and the initial power value is adjusted to match the transmission power value.

19. The mobile communication system as claimed in claim 13, wherein the transmission power setting means is adapted to set the transmission power of each of the downlink time slots of the second group according to fading frequency of communications between the base station and the mobile station.

20. The mobile communications system as claimed in claim 19, wherein the transmission power setting means is adapted to provide an initial transmission power value that is predetermined, and to obtain the transmission power of each of the downlink time slots of the second group by adjusting the initial transmission power value in accordance with the fading frequency of the communications between the base station and the mobile station.

21. A base station (120) of a mobile communications system (100) comprising a plurality of antennas (121), each of which is capable of both receiving and transmitting, that employs a TDD method for communications with a mobile station (110), wherein a first number of downlink time slots are contiguously assigned to a downlink circuit that carries traffic from the base station to the mobile station, **characterised in that** a second number of uplink time slots are contiguously assigned to an uplink circuit that carries traffic from the mobile station to the base station, where the first number and the second number do not have to be equal, comprising:
an uplink receiving power value extracting unit (124) adapted to extract receiving power values of all contiguous uplink time slots for each of the antennas,
an uplink receiving power averaging unit (125) adapted to average the receiving power values of the contiguous uplink time slots for each of the antennas, and
a transmission power setting unit (126) adapted to set up transmission power, for each of the antennas, of each of downlink time slots contiguously assigned that are to be transmitted from the base station through each of the antennas based on the averaged receiving power value of the contiguous uplink time slots.

22. The base station as claimed in claim 21, wherein the uplink receiving power averaging unit is adapted to attach weight according to a predetermined set of weighting factors to each of the receiving power values of the uplink time slots, and averages the receiving power values that are weighted hereinabove.

23. The base station as claimed in claim 21, wherein the transmission power setting unit is adapted to set up the transmission power for each of the uplink time slots that are to be sent next according to a time lapse from a point in time when the averaged receiving power value is obtained for the uplink time slots to a point in time when each of the downlink time slots is to be transmitted.

24. The base station as claimed in claim 23, wherein the transmission power setting unit is adapted to provide an initial power value that is predetermined, and to obtain the transmission power value according to the time lapse from the point in time when the averaged receiving power value is obtained for the uplink time slots to the time point when each of the downlink time slots that are to be transmitted next is transmitted, and the initial power value is adjusted to coincide with the transmission power value.

25. The base station as claimed in claim 21, wherein the transmission power setting unit is adapted to set up the transmission power of each of the downlink time slots that are to be transmitted next according to fading frequency of communications between the base station and the mobile station.

26. The base station as claimed in claim 25, wherein the transmission power setting unit is adapted to provide an initial transmission power value that is predetermined, and to obtain the transmission power of each of the downlink time slots that are to be transmitted next by adjusting the initial transmission power value in accordance with the fading frequency of the communications between the base station and the mobile station.

## Patentansprüche

1. Sendeleistungs-Einstellverfahren eines mobilen Kommunikationssystems (100), das ein TDD-Verfahren für Kommunikationen zwischen einer Basisstation (120), die mit einer Mehrzahl von Antennen (121) ausgestattet ist, wobei jede in der Lage ist, sowohl zu empfangen als auch zu senden, und einer Mobilstation (110) einsetzt, wobei eine erste Zahl von Abwärtsstrecken-Zeitschlitzen angrenzend einer Abwärtsstrecken-Schaltung zugeordnet sind, die einen Verkehr von der Basisstation zu der Mobilstation trägt, und **gekennzeichnet dadurch, dass** eine zweite Zahl von Aufwärtsstrecken-Zeitschlitzen angrenzend einer Aufwärtsstrecken-Schaltung zugeordnet sind, die einen Verkehr von der Mobilstation zu der Basisstation trägt, wobei die erste Zahl und die zweite Zahl nicht gleich sein müssen, und eine Sendeleistung jedes der Abwärtsstrecken-Zeitschlitze einzeln eingestellt wird, umfassend:
Extrahieren, durch die Basisstation, eines Empfangsleistungswerts jedes der angrenzenden Aufwärtsstrecken-Zeitschlitze für jede der Antennen,
Mitteln, durch die Basisstation, der Empfangsleistungswerte der angrenzenden Aufwärtsstrecken-Zeitschlitze für jede der Antennen, und
Einstellen, durch die Basisstation, für jede der Antennen, einer Sendeleistung jedes der Abwärtsstrecken-Zeitschlitze, die angrenzend als eine zweite Gruppe zugeordnet sind und von der Basisstation über jede der Antennen auf der Grundlage der gemittelten Empfangsleistung der Aufwärtsstrecken-Zeitschlitze zu senden sind.

2. Sendeleistungs-Einstellverfahren nach Anspruch 1, weiter umfassend:
Extrahieren, durch die Mobilstation, von Empfangsqualitätswerten sämtlicher Abwärtsstrecken-Zeitschlitze, die als eine erste Gruppe angrenzend zugeordnet sind,
Mitteln, durch die Mobilstation, der Empfangsqualitätswerte für sämtliche der Abwärtsstrecken-Zeitschlitze, die angrenzend als die erste Gruppe zugeordnet sind, und
Einstellen, durch die Basisstation, für jede der Antennen, einer Sendeleistung jedes der Abwärtsstrecken-Zeitschlitze, die angrenzend als eine zweite Gruppe zugeordnet sind, die von der Basisstation über jede der Antennen auf der Grundlage der gemittelten Empfangsqualität der ersten Gruppe der Abwärtsstrecken-Zeitschlitze, die angrenzend zugeordnet sind, und der gemittelten Empfangsleistung der angrenzenden Aufwärtsstrecken-Zeitschlitze zu senden sind.

3. Sendeleistungs-Einstellverfahren nach Anspruch 2, wobei jeder der Empfangsqualitätswerte sämtlicher der Abwärtsstrecken-Zeitschlitze mit einem vorbestimmten Gewichtungsfaktor multipliziert wird, und wobei die gemittelte Empfangsqualität durch ein Mitteln der Empfangsqualitätswerte erhalten wird, die gewichtet sind.

4. Sendeleistungs-Einstellverfahren nach Anspruch 2, wobei die Sendeleistung jedes der Abwärtsstrecken-Zeitschlitze der zweiten Gruppe entsprechend einem Zeitverlauf von einem Zeitpunkt, wenn der Mittelwert der Empfangsqualitätswerte der ersten Gruppe der Abwärtsstrecken-Zeitschlitze erhalten wird, zu einem Zeitpunkt, wenn jeder der Zeitschlitze der zweiten Gruppe gesendet wird, eingestellt wird.

5. Sendeleistungs-Einstellverfahren nach Anspruch 4, wobei ein Anfangssendeleistungswert vorbestimmt wird, und die Sendeleistung jedes der Abwärtsstrecken-Zeitschlitze der zweiten Gruppe von der dem vorbestimmten Anfangssendeleistungswert gemäß einem Zeitverlauf von einem Zeitpunkt, wenn der Mittelwert der Empfangsqualitätswerte der ersten Gruppe der Abwärtsstrecken-Zeitschlitze erhalten wird, zu einem Zeitpunkt, wenn jeder der Zeitschlitze der zweiten Gruppe gesendet wird, abgestimmt wird.

6. Sendeleistungs-Einstellverfahren nach Anspruch 1, wobei der mittlere Empfangsleistungswert durch ein Mitteln der extrahierten Empfangsleistungswerte der Aufwärtsstrecken-Zeitschlitze erhalten wird, die durch einen vorbestimmten Satz von Gewichtungsfaktoren gewichtet sind.

7. Sendeleistungs-Einstellverfahren nach Anspruch 1, wobei die Sendeleistung für jeden der Abwärtsstrecken-Zeitschlitze der zweiten Gruppe gemäß einem Zeitverlauf von einem Zeitpunkt, wenn der gemittelte Empfangsleistungswert von den Aufwärtsstrecken-Zeitschlitzen erhalten wird, zu einem Zeitpunkt, wenn jeder der Abwärtsstrecken-Zeitschlitze der zweiten Gruppe gesendet wird, eingestellt wird.

8. Sendeleistungs-Einstellverfahren nach Anspruch 7, wobei ein Anfangsleistungswert vorbestimmt wird, der Sendeleistungswert entsprechend dem Zeitverlauf von dem Zeitpunkt, wenn der gemittelte Empfangsleistungswert für die Aufwärtsstrecken-Zeitschlitze erhalten wird zu dem Zeitpunkt, wenn jeder der Abwärtsstrecken-Zeitschlitze der zweiten Gruppe gesendet wird, erhalten wird, und der Anfangsleistungswert abgestimmt wird, mit dem Sendeleistungswert übereinzustimmen.

9. Sendeleistungs-Einstellverfahren nach Anspruch 2, wobei die Sendeleistung jedes der Abwärtsstrecken-Zeitschlitze der zweiten Gruppe in Übereinstimmung mit einer Fading-Frequenz bei Kommunikationen zwischen der Basisstation und der Mobilstation eingestellt wird.

10. Sendeleistungs-Einstellverfahren nach Anspruch 9, wobei eine Anfangssendeleistung vorbestimmt wird, und die Sendeleistung jedes der Abwärtsstrecken-Zeitschlitze der zweiten Gruppe durch ein Abstimmen der Anfangssendeleistung in Übereinstimmung mit einer Fading-Frequenz in Kommunikationen zwischen der Basisstation und der Mobilstation erhalten wird.

11. Mobilkommunikationssystem (100), das ein TDD-Verfahren für Kommunikationen zwischen einer Basisstation (120), die mit einer Mehrzahl von Antennen (121) ausgestattet ist, wovon jede in der Lage ist, sowohl zu empfangen als auch zu senden, und einer Mobilstation (110) einsetzt, wobei eine erste Zahl von Abwärtsstrecken-Zeitschlitzen angrenzend einer Abwärtsstrecken-Schaltung zugeordnet sind, die einen Verkehr von der Basisstation zu der Mobilstation trägt, und **dadurch gekennzeichnet, dass** eine zweite Zahl von Aufwärtsstrecken-Zeitschlitzen angrenzend einer Aufwärtsstrecken-Schaltung zugeordnet sind, die einen Verkehr von der Mobilstation zu der Basisstation trägt, wobei die erste Zahl und die zweite Zahl nicht gleich sein müssen, und eine Sendeleistung jedes der Aufwärtsstrecken-Zeitschlitze einzeln eingestellt wird, umfassend:
eine Aufwärtsstrecken-Empfangsleistungswert-Extraktionseinheit (123), die ausgelegt ist, Empfangsleistungswerte sämtlicher angrenzender Aufwärtsstrecken-Zeitschlitze für jede der Antennen zu extrahieren, und
eine Aufwärtsstrecken-Empfangsleistungs-Mittelungseinheit (124), die ausgelegt ist, die Empfangsleistungswerte der angrenzenden Aufwärtsstrecken-Zeitschlitze für jede der Antennen zu mitteln, und
eine Sendeleistungs-Einstelleinrichtung (126) in der Basisstation, die ausgelegt ist, für jede der Antennen die Sendeleistung jedes der Abwärtsstrecken-Zeitschlitze einzustellen, die angrenzend als eine zweite Gruppe angeordnet sind, die von der Basisstation über jede der Antennen auf der Grundlage des gemittelten Empfangsleistungswerts der angrenzenden Aufwärtsstrecken-Zeitschlitze zu senden sind.

12. Mobilkommunikationssystem nach Anspruch 11, weiter umfassend:
eine in der Mobilstation bereitgestellte Abwärtsstrecken-Empfangsqualitätswert-Extraktionseinrichtung (115), die ausgelegt ist, Empfangsqualitätswerte jedes der Mehrzahl von Abwärtsstrecken-Zeitschlitzen zu extrahieren, die als eine erste Gruppe gesendet werden,
eine in der Mobilstation bereitgestellte Abwärtsstrecken-Empfangsqualitätswert-Mittelungseinrichtung (116), die ausgelegt ist, Qualitätswerte der Abwärtsstrecken-Zeitschlitze, die angrenzend als die erste Gruppe gesendet werden, zu mitteln, und die in der Basisstation bereitgestellte Sendeleistungs-Einstelleinrichtung, die ausgelegt ist, eine Sendeleistung für jeden der als eine zweite Gruppe zu sendenden Abwärtsstrecken-Zeitschlitze einzustellen, die angrenzend der Abwärtsstrecken-Schaltung zugeordnet sind.

13. Mobilkommunikationssystem nach Anspruch 12, wobei die Abwärtsstrecken-Empfangsqualitäts-Mittelungseinrichtung ausgelegt ist, ein Gewicht gemäß einem vorbestimmten Satz von Gewichtungsfaktoren an jedem der Abwärtsstrecken-Empfangsqualitätswerte der Abwärtsstrecken-Zeitschlitze der ersten Gruppe anzubringen, und die Abwärtsstrecken-Empfangsqualitäts-Mittelungseinrichtung ausgelegt ist, die Abwärtsstrecken-Empfangsqualitätswerte, die obenstehend gewichtet sind, zu mitteln.

14. Mobilkommunikationssystem nach Anspruch 12, wobei die Sendeleistungs-Einstelleinrichtung ausgelegt ist, die Sendeleistung für jeden der Abwärtsstrecken-Zeitschlitze, die angrenzend als die zweite Gruppe zu senden sind, gemäß einem Zeitverlauf von einem Zeitpunkt, wenn der Mittelwert der Empfangsqualitätswerte der ersten Gruppe der Abwärtsstrecken-Zeitschlitze erhalten wird, bis zu einem Zeitpunkt, wenn jeder der Zeitschlitze der zweiten Gruppe gesendet wird, einzustellen.

15. Mobilkommunikationssystem nach Anspruch 14, wobei die Sendeleistungs-Einstelleinrichtung einen vorbestimmten Anfangssendeleistungswert umfasst und ausgelegt ist, die Sendeleistung jedes der Abwärtsstrecken-Zeitschlitze der zweiten Gruppe aus dem vorbestimmten Anfangssendeleistungswert gemäß einem Zeitverlauf von einem Zeitpunkt, wenn der Mittelwert der Empfangsqualitätswerte der ersten Gruppe der Abwärtsstrecken-Zeitschlitze erhalten wird, bis zu einem Zeitpunkt, wenn jeder der Zeitschlitze der zweiten Gruppe gesendet wird, abzustimmen.

16. Mobilkommunikationssystem nach Anspruch 12, wobei die Aufwärtsstrecken-Empfangsleistungs-Mittelungseinrichtung ausgelegt ist, gemäß einem vorbestimmten Satz von Gewichtungsfaktoren ein Gewicht an jedem der Empfangsleistungswerte der Aufwärtsstrecken-Zeitschlitze anzubringen, und die Empfangsleistungserte, die obenstehend gewichtet sind, mittelt.

17. Mobilkommunikationssystem nach Anspruch 12, wobei die Sendeleistungs-Einstelleinrichtung ausgelegt ist, die Sendeleistung für jeden der Abwärtsstrecken-Zeitschlitze der zweiten Gruppe gemäß einem Zeitverlauf von einem Zeitpunkt, wenn der gemittelte Empfangsleistungswert für die Aufwärtsstrecken-Zeitschlitze erhalten wird, zu einem Zeitpunkt, wenn jeder der Abwärtsstrecken-Zeitschlitze der zweiten Gruppe gesendet wird, einzustellen.

18. Mobilkommunikationssystem nach Anspruch 17, wobei die Sendeleistungs-Einstelleinrichtung ausgelegt ist, einen Anfangsleistungswert bereitzustellen, der vorbestimmt ist, und den Sendeleistungswert gemäß dem Zeitverlauf von einem Zeitpunkt, wenn der gemittelte Empfangsleistungswert für die Aufwärtsstrecken-Zeitschlitze erhalten wird, zu dem Zeitpunkt, wenn jeder der Abwärtsstrecken-Zeitschlitze der zweiten Gruppe gesendet wird, zu erhalten, und der Anfangsleistungswert abgestimmt wird, zu dem Sendeleistungswert zu passen.

19. Mobilkommunikationssystem nach Anspruch 13, wobei die Sendeleistungs-Einstelleinrichtung ausgelegt ist, die Sendeleistung jedes der Abwärtsstrecken-Zeitschlitze der zweiten Gruppe gemäß einer Fading-Frequenz von Kommunikationen zwischen der Basisstation und der Mobilstation einzustellen.

20. Mobilkommunikationssystem nach Anspruch 19, wobei die Sendeleistungs-Einstelleinrichtung ausgelegt ist, einen Anfangssendeleistungswert bereitzustellen, der vorbestimmt ist, und die Sendeleistung jedes der Abwärtsstrecken-Zeitschlitze der zweiten Gruppe zu erhalten, indem der Anfangssendeleistungswert in Übereinstimmung mit der Fading-Frequenz der Kommunikationen zwischen der Basisstation und der Mobilstation abgestimmt wird.

21. Basisstation (120) eines Mobilkommunikationssystems (100), das ein TDD-Verfahren für Kommunikationen mit einer Mobilstation (110) einsetzt, umfassend eine Mehrzahl von Antennen (121), wobei jede in der Lage ist, sowohl zu empfangen als auch zu senden, wobei eine erste Zahl von Abwärtsstrecken-Zeitschlitzen angrenzend einer Abwärtsstrecken-Schaltung zugeordnet sind, die einen Verkehr von der Basisstation zu der Mobilstation trägt, **dadurch gekennzeichnet, dass** eine zweite Zahl von Aufwärtsstrecken-Zeitschlitzen angrenzend einer Aufwärtsstrecken-Schaltung zugeordnet sind, die einen Verkehr von der Mobilstation zu der Basisstation trägt, wobei die erste Zahl und die zweite Zahl nicht gleich sein müssen, umfassend:
eine Aufwärtsstrecken-Empfangsleistungswert-Extraktionseinheit (124), die ausgelegt ist, Empfangsleistungswerte sämtlicher angrenzender Aufwärtsstrecken-Zeitschlitze für jede der Antennen zu extrahieren,
eine Aufwärtsstrecken-Empfangsleistungs-Mittelungseinheit (125), die ausgelegt ist, die Empfangsleistungswerte der angrenzenden Aufwärtsstrecken-Zeitschlitze für jede der Antennen zu mitteln, und
eine Sendeleistungs-Einstelleinheit (126), die ausgelegt ist, für jede der Antennen eine Sendeleistung jedes der angrenzend zugeordneten Abwärtsstrecken-Zeitschlitze, die von der Basisstation über jede der Antennen zu senden sind, auf der Grundlage des gemittelten Empfangsleistungswerts der angrenzenden Aufwärtsstrecken-Zeitschlitze einzustellen.

22. Basisstation nach Anspruch 21, wobei die Aufwärtsstrecken-Empfangsleistungs-Mittelungseinheit ausgelegt ist, ein Gewicht gemäß einem vorbestimmten Satz von Gewichtungsfaktoren an jedem der Empfangsleistungswerte der Aufwärtsstrecken-Zeitschlitze anzubringen, und die Empfangsleistungswerte, die obenstehend gewichtet sind, mittelt.

23. Basisstation nach Anspruch 21, wobei die Sendeleistungs-Einstelleinheit ausgelegt ist, die Sendeleistung für jeden der Aufwärtsstrecken-Zeitschlitze, die als Nächstes zu senden sind, gemäß einem Zeitverlauf von einem Zeitpunkt, wenn der gemittelte Empfangsleistungswert für die Aufwärtsstrecken-Zeitschlitze erhalten wird, zu einem Zeitpunkt, wenn jeder der Abwärtsstrecken-Zeitschlitze zu senden ist, einzustellen.

24. Basisstation nach Anspruch 23, wobei die Sendeleistungs-Einstelleinheit ausgelegt ist, einen Anfangsleistungswert bereitzustellen, der vorbestimmt ist, und den Sendeleistungswert gemäß dem Zeitverlauf von dem Zeitpunkt, wenn der gemittelte Empfangsleistungswert für die Aufwärtsstrecken-Zeitschlitze erhalten wird, zu dem Zeitpunkt, wenn jeder der Abwärtsstrecken-Zeitschlitze, die als Nächstes zu senden sind, gesendet wird, zu erhalten, und der Anfangsleistungswert abgestimmt ist, mit dem Sendeleistungswert übereinzustimmen.

25. Basisstation nach Anspruch 21, wobei die Sendeleistungs-Einstelleinheit ausgelegt ist, die Sendeleistung jedes der Abwärtsstrecken-Zeitschlitze, die als Nächstes zu senden sind, gemäß einer Fading-Frequenz von Kommunikationen zwischen der Basisstation und der Mobilstation einzustellen.

26. Basisstation nach Anspruch 25, wobei die Sendeleistungs-Einstelleinheit ausgelegt ist, einen Anfangssendeleistungswert bereitzustellen, der vorbestimmt ist, und die Sendeleistung jedes der Abwärtsstrecken-Zeitschlitze, die als Nächstes zu senden sind, zu erhalten, indem der Anfangssendeleistungswert in Übereinstimmung mit der Fading-Frequenz der Kommunikationen zwischen der Basisstation und der Mobilstation abgestimmt wird.

## Revendications

1. Procédé de réglage de puissance d'émission d'un système de communications mobiles (100) qui emploie un procédé de communications TDD entre une station de base (120) qui est équipée d'une pluralité d'antennes (121), qui peuvent chacune recevoir et émettre, et une station mobile (110), dans lequel un premier nombre de tranches de liaison descendante sont attribuées de façon contiguë à un circuit de liaison descendante qui achemine le trafic depuis la station de base jusqu'à la station mobile, et **caractérisé en ce qu'**un deuxième nombre de tranches de temps de liaison montante sont attribuées de façon contiguë à un circuit de liaison montante qui achemine le trafic depuis la station mobile jusqu'à la station de base, où le premier nombre et le deuxième nombre n'ont pas à être égaux, et la puissance d'émission de chacune desdites tranches de temps de liaison descendante est réglée individuellement, comprenant :
l'extraction par la station de base d'une valeur de puissance de réception de chacune des tranches de temps contiguës de liaison montante pour chacune des antennes,
le moyennage par la station de base des valeurs de puissance de réception des tranches de temps de liaison montante contiguës pour chacune des antennes, et
le réglage par la station de base pour chacune des antennes de la puissance d'émission de chacune des tranches de temps de liaison descendante qui sont attribuées de façon contiguë comme deuxième groupe et devant être émises depuis la station de base par le biais de chacune des antennes en fonction de la puissance de réception moyennée des tranches de temps de liaison montante.

2. Procédé de réglage de puissance d'émission selon la revendication 1, comprenant en outre :
l'extraction par la station de base de valeurs de qualité de réception de toutes les tranches de temps de liaison descendante qui sont attribuées de façon contiguë comme premier groupe,
le moyennage par la station de base des valeurs de qualité de réception de toutes les tranches de temps de liaison descendante attribuées de façon contiguë comme premier groupe, et
le réglage par la station de base pour chacune des antennes de la puissance d'émission de chacune des tranches de temps de liaison descendante qui sont attribuées de façon contiguë comme deuxième groupe, qui doivent être émises depuis la station de base par le biais de chacune des antennes en fonction de la qualité de réception moyennée du premier groupe de tranches de temps de liaison descendante attribuées de façon contiguë, et de la puissance de réception moyennée des tranches de temps de liaison montante contiguës.

3. Procédé de réglage de puissance d'émission selon la revendication 2, dans lequel chacune des valeurs de qualité de réception de toutes les tranches de temps de liaison descendante est multipliée par un facteur de pondération prédéterminé, et la qualité de réception moyennée est obtenue en moyennant les valeurs de qualité de réception qui sont pondérées.

4. Procédé de réglage de puissance d'émission selon la revendication 2, dans lequel la puissance d'émission de chacune des tranches de temps de liaison descendante du deuxième groupe est réglée en fonction d'un laps de temps depuis un point dans le temps où la moyenne des valeurs de qualité de réception du premier groupe de tranches de temps de liaison descendante est obtenue jusqu'à un point dans le temps où chacune des tranches de temps du deuxième groupe est émise.

5. Procédé de réglage de puissance d'émission selon la revendication 4, dans lequel une valeur de puissance d'émission initiale est prédéterminée, et la puissance d'émission de chacune des tranches de temps de liaison descendante du deuxième groupe est ajustée par rapport à la valeur de puissance d'émission initiale prédéterminée en fonction d'un laps de temps depuis un point dans le temps où la moyenne des valeurs de qualité de réception du premier groupe de tranches de temps de liaison descendante est obtenue jusqu'à un point dans le temps où chacune des tranches de temps du deuxième groupe est émise.

6. Procédé de réglage de puissance d'émission selon la revendication 1, dans lequel la valeur de puissance de réception moyennée est obtenue en moyennant les valeurs de puissance de réception extraites des tranches de temps de liaison montante qui sont pondérées par un ensemble prédéterminé de facteurs de pondération.

7. Procédé de réglage de puissance d'émission selon la revendication 1, dans lequel 1a puissance d'émission de chacune des tranches de temps de liaison descendante du deuxième groupe est réglée en fonction d'un laps de temps depuis un point dans le temps où la valeur de puissance de réception moyennée est obtenue pour les tranches de temps de liaison montante jusqu'à un point dans le temps où chacune des tranches de temps de liaison descendante du deuxième groupe est émise.

8. Procédé de réglage de puissance d'émission selon la revendication 7, dans lequel une valeur de puissance initiale est prédéterminée, la valeur de puissance d'émission est obtenue relativement au laps de temps depuis le point dans le temps où la valeur de puissance de réception moyennée est obtenue pour les tranches de temps de liaison montante jusqu'au point dans le temps où chacune des tranches de temps de liaison descendante du deuxième groupe est émise, et la valeur de puissance initiale est ajustée pour coïncider avec la valeur de puissance d'émission.

9. Procédé de réglage de puissance d'émission selon la revendication 2, dans lequel la puissance d'émission de chacune des tranches de temps de liaison descendante du deuxième groupe est réglée conformément à la fréquence d'évanouissement des communications entre la station de base et la station mobile.

10. Procédé de réglage de puissance d'émission selon la revendication 9, dans lequel une puissance d'émission initiale est prédéterminée, et la puissance d'émission de chacune des tranches de temps de liaison descendante du deuxième groupe est obtenue en ajustant la puissance d'émission initiale conformément à la fréquence d'évanouissement des communications entre la station de base et la station mobile.

11. Système de communications mobiles (100) qui emploie un procédé de communications TDD entre une station de base (120) qui est équipée d'une pluralité d'antennes (121), qui peuvent chacune recevoir et émettre, et une station mobile (110), dans lequel un premier nombre de tranches de temps de liaison descendante sont attribuées de façon contiguë à un circuit de liaison descendante qui achemine le trafic depuis la station de base jusqu'à la station mobile, et **caractérisé en ce qu'**un deuxième nombre de tranches de temps de liaison montante sont attribuées de manière contiguë à un circuit de liaison montante qui achemine le trafic depuis la station mobile jusqu'à la station de base, où le premier nombre et le deuxième nombre n'ont pas à être égaux, et la puissance d'émission de chacune desdites tranches de temps de liaison descendante est réglée individuellement, comprenant :
une unité d'extraction de valeurs de puissance de réception de liaison montante (123) adaptée pour extraire des valeurs de puissance de réception de toutes les tranches de temps de liaison montante contiguës pour chacune des antennes, et
une unité de moyennage de puissance de réception de liaison montante (124) adaptée pour moyenner les valeurs de puissance de réception des tranches de temps de liaison montante contiguës pour chacune des antennes, et
un moyen de réglage de puissance d'émission (126) dans 1a station de base pour régler, pour chacune des antennes, la puissance d'émission de chacune des tranches de temps de liaison descendante contiguës attribuées comme deuxième groupe et devant être émises depuis la station de base par le biais de chacune des antennes en fonction de la valeur de puissance de réception moyennée des tranches de temps de liaison montante contiguës.

12. Système de communications mobiles selon la revendication 11, comprenant en outre :
un moyen d'extraction de valeurs de qualité de réception de liaison descendante (115), fourni dans la station mobile, adapté pour extraire des valeurs de qualité de réception de chacune de la pluralité de tranches de temps de liaison montante qui sont émises comme premier groupe,
un moyen de moyennage de valeurs de qualité de réception de liaison descendante (116) fourni dans la station mobile, adapté pour moyenner des valeurs de qualité des tranches de temps de liaison descendante qui sont attribuées de façon contiguë comme premier groupe, et le moyen de réglage de puissance d'émission fourni dans la station de base étant adapté pour régler la puissance d'émission pour chacune des tranches de temps de liaison descendante devant être émises comme deuxième groupe, lesquelles sont attribuées de façon contiguë au circuit de liaison descendante.

13. Système de communications mobiles selon la revendication 12, dans lequel le moyen de moyennage de qualité de réception de liaison descendante est adapté pour attacher un poids, conformément à un ensemble prédéterminé de facteurs de pondération, à chacune des valeurs de qualité de réception de liaison descendante des tranches de temps de liaison descendante du premier groupe, et le moyen de moyennage de qualité de réception de liaison descendante est adapté pour moyenner les valeurs de qualité de réception de liaison descendante qui sont pondérées ci-dessus.

14. Système de communications mobiles selon la revendication 12, dans lequel le moyen de réglage de puissance d'émission est adapté pour régler la puissance d'émission de chacune des tranches de temps de liaison descendante devant être émises de façon contiguë comme deuxième groupe en fonction d'un laps de temps depuis un point dans le temps où la moyenne des valeurs de qualité de réception du premier groupe de tranches de temps de liaison descendante est obtenue jusqu'à un point dans le temps où chacune des tranches de temps du deuxième groupe est émise.

15. Système de communications mobiles selon la revendication 14, dans lequel le moyen de réglage de puissance d'émission comprend une valeur de puissance d'émission initiale prédéterminée, et est adapté pour ajuster la puissance d'émission de chacune des tranches de temps de liaison descendante du deuxième groupe par rapport à la valeur de puissance d'émission initiale prédéterminée en fonction d'un laps de temps depuis un point dans le temps où la moyenne des valeurs de qualité de réception du premier groupe de tranches de temps de liaison descendante est obtenue jusqu'à un point dans le temps où chacune des tranches de temps du deuxième groupe est émise.

16. Système de communications mobiles selon la revendication 12, dans lequel le moyen de moyennage de puissance de réception de liaison montante est adapté pour attacher un poids, conformément à un ensemble prédéterminé de facteurs de pondération, à chacune des valeurs de puissance de réception des tranches de temps de liaison montante, et moyenne les valeurs de puissance de réception qui sont pondérées ci-dessus.

17. Système de communications mobiles selon la revendication 12, dans lequel le moyen de réglage de puissance d'émission est adapté pour régler la puissance d'émission de chacune des tranches de temps de liaison descendante du deuxième groupe en fonction d'un laps de temps depuis un point dans le temps où la valeur de puissance de réception moyennée est obtenue pour les tranches de temps de liaison montante jusqu'à un point dans 1e temps où chacune des tranches de temps de liaison descendante du deuxième groupe est émise.

18. Système de communications mobiles selon la revendication 17, dans lequel le moyen de réglage de puissance d'émission est adapté pour fournir une valeur de puissance initiale qui est prédéterminée, et pour obtenir la valeur de puissance d'émission relativement au laps de temps depuis le point dans le temps où la valeur de puissance de réception moyennée est obtenue pour les tranches de temps de liaison montante jusqu'au point dans le temps où chacune des tranches de temps de liaison descendante du deuxième groupe est émise, et la valeur de puissance initiale est ajustée pour coïncider avec la valeur de puissance d'émission.

19. Système de communications mobiles selon la revendication 13, dans lequel le moyen de réglage de puissance d'émission est adapté pour régler la puissance d'émission de chacune des tranches de temps de liaison descendante du deuxième groupe conformément à la fréquence d'évanouissement des communications entre la station de base et la station mobile.

20. Système de communications mobiles selon la revendication 19, dans lequel le moyen de réglage de puissance d'émission est adapté pour fournir une valeur de puissance d'émission initiale qui est prédéterminée, et pour obtenir la puissance d'émission de chacune des tranches de temps de liaison descendante du deuxième groupe en ajustant la valeur de puissance d'émission initiale conformément à la fréquence d'évanouissement des communications entre la station de base et la station mobile.

21. Station de base (120) d'un système de communications mobiles (100) comprenant une pluralité d'antennes (121), qui peuvent chacune recevoir et émettre, qui emploie un procédé de communications TDD avec une station mobile (110), dans laquelle un premier nombre de tranches de liaison descendante sont attribuées de façon contiguë à un circuit de liaison descendante qui achemine le trafic depuis la station de base jusqu'à la station mobile, **caractérisée en ce qu'**un deuxième nombre de tranches de temps de liaison montante sont attribuées de façon contiguë à un circuit de liaison montante qui achemine le trafic depuis la station mobile jusqu'à la station de base, où le premier nombre et le deuxième nombre n'ont pas à être égaux, comprenant :
une unité d'extraction de valeurs de puissance de réception de liaison montante (124) adaptée pour extraire des valeurs de puissance de réception de toutes les tranches de temps de liaison montante contiguës pour chacune des antennes,
une unité de moyennage de puissance de réception de liaison montante (125) adaptée pour moyenner les valeurs de puissance de réception des tranches de temps de liaison montante contiguës pour chacune des antennes, et
une unité de réglage de puissance d'émission (126) adaptée pour régler la puissance d'émission, pour chacune des antennes, de chacune des tranches de temps de liaison descendante attribuées de façon contiguë devant être émises depuis 1a station de base par le biais de chacune des antennes en fonction de la valeur de puissance de réception moyennée des tranches de temps de liaison montante contiguës.

22. Station de base selon la revendication 21, dans laquelle l'unité de moyennage de puissance de réception de liaison montante est adaptée pour attacher un poids conformément à un ensemble prédéterminé de facteurs de pondération à chacune des valeurs de puissance de réception des tranches de temps de liaison montante, et moyenne les valeurs de puissance de réception qui sont pondérées ci-dessus.

23. Station de base selon la revendication 21, dans laquelle l'unité de réglage de puissance d'émission est adaptée pour régler la puissance d'émission de chacune des tranches de temps de liaison montante à envoyer ensuite conformément à un laps de temps depuis un point dans le temps où la valeur de puissance de réception moyennée est obtenue pour les tranches de temps de liaison montante jusqu'à un point dans le temps où chacune des tranches de temps de liaison descendante doit être émise.

24. Station de base selon la revendication 23, dans laquelle l'unité de réglage de puissance d'émission est adaptée pour fournir une valeur de puissance initiale qui est prédéterminée, et pour obtenir la valeur de puissance d'émission conformément au laps de temps depuis le point dans le temps où la valeur de puissance de réception moyennée est obtenue pour les tranches de temps de liaison montante jusqu'au point dans le temps où chacune des tranches de temps de liaison descendante à émettre ensuite est émise, et la valeur de puissance initiale est ajustée pour coïncider avec la valeur de puissance d'émission.

25. Station de base selon la revendication 21, dans laquelle l'unité de réglage de puissance d'émission est adaptée pour régler la puissance d'émission de chacune des tranches de temps de liaison descendante devant être émises ensuite conformément à la fréquence d'évanouissement des communications entre la station de base et la station mobile..

26. Station de base selon la revendication 25, dans laquelle l'unité de réglage de puissance d'émission est adaptée pour fournir une valeur de puissance d'émission initiale qui est prédéterminée, et pour obtenir la puissance d'émission de chacune des tranches de temps de liaison descendante devant être émises ensuite en ajustant la valeur de puissance d'émission initiale conformément à 1a fréquence d'évanouissement des communications entre la station de base et la station mobile.
